(19) Europäisches Patentamt / European Patent Office / Office européen des brevets

(11) **EP 2 009 944 A1**

(12) **EUROPEAN PATENT APPLICATION**

(43) Date of publication:
**31.12.2008 Bulletin 2009/01**

(51) Int Cl.:
**H04Q 7/38** (2006.01)

(21) Application number: **07301184.3**

(22) Date of filing: **29.06.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS**<br><br>(71) Applicant: **Alcatel Lucent**<br>**75008 Paris (FR)** | (72) Inventor: **Duplessis, Philippe**<br>**92253 La Garenne-Colombes Cedex (FR)**<br><br>(74) Representative: **Ameline, Jean-Paul B.C.**<br>**Alcatel-Lucent**<br>**Intellectual Property & Standards**<br>**54, rue La Boétie**<br>**75008 Paris (FR)** |

(54) **Method of identification of a home gateway access node, home gateway access node and mobile station to carry out the method**

(57)    A method of identifying a home gateway access node by a mobile station is proposed. A fingerprint is generated from a combination of a first fingerprint of an identity associated with the mobile station and a fingerprint of a mobile subscriber identity, and broadcast from the home gateway access node to mobile stations. The generated fingerprint is received and stored at the mobile station, which identifies the home gateway access node when a match between the received fingerprint and information stored in a subscriber identification module associated with the mobile station is detected.

FIG_1

**Description**

BACKGROUND OF THE INVENTION

The present invention relates to identification of a home gateway access node in cellular wireless communication systems.

With the emergence of broadband wireless access, it has become more and more apparent that a new solution is needed to achieve high data rate services in a residential context. Such a solution would require radiation from inside the building, rather than current solutions which rely on conventional macro-cell engineering radiating from outdoor, consequently incurring high outdoor to indoor in-building penetration losses. One solution that exists and is actively considered today is the so-called "home gateway" (also called "residential gateway"). A home gateway (HGW) provides a radio interface similar to that of a cellular infrastructure, and interfaces with a cellular network. The coverage of the HGW can be considered as a cell of the cellular network to which it is fully integrated, which results in the HGW extending the coverage of a cellular infrastructure. The HGW typically consists of a small, low-power, base station or base station router, radiating according to a radio interface similar or identical to that of an outdoor wireless network, and connected to the wireless network infrastructure by means of the user's DSL line or more generally any broadband access.

One specific difficulty encountered in the deployment of home gateways relates to access control and the ability to hand over a user communication going on through a serving base station belonging to the "public" part of the network to a HGW which belongs to a "private" part, i.e. to which access is not allowed for every mobile station user. Such functionality is useful, for example, when the user arrives home where the HGW provides indoor coverage in much better conditions than the public macro-cell. It implies that, during a communication, the mobile terminal monitors beacon channels broadcast from cells in the neighborhood of the serving base station including the beacon channel broadcast by the HGW, in order to make it possible to detect that a handover to the HGW would be desirable.

As the HGW is a residential application, the HGW device would typically be purchased or else rent by a main user, who can be referred to as the "owner" of the HGW. In addition to excellent service performances, the benefit for the owner may be a reduced fare when he/she uses his/her own HGW. This could also apply to a limited number of additional users, such as typically some family members of the owner, who would be registered by the owner.

In such a context, there is a need for the owner, and possibly for other users, to have knowledge that their mobile station is located under the radio coverage of their HGW, instead of being located under the coverage of an outdoor macro-cell or else accidentally under the coverage of a HGW which is not their own (for instance a neighbor's HGW). Having such knowledge becomes critical when a specific home zone fare or special HGW coverage fare is applied.

An object of the present invention is to provide a method for identifying a home gateway access node to a user located under its coverage. Another object of the present invention is to provide a solution allowing a home gateway user to know that its mobile station is located under the coverage of a specific home gateway. Yet another object of the present invention is to provide a solution allowing the owner of a home gateway as well as possibly other users to know that their respective mobile station is located under the coverage of the home gateway owned by the owner or to which the user has access rights.

The invention thus proposes a method of identifying a home gateway access node, in a cellular radio-communication system comprising a core network and an access network, the access network comprising home gateway access nodes, wherein each home gateway access node has a base transceiver station for providing wireless links to at least one mobile station. The method comprises the steps of obtaining a first fingerprint of an identity associated with the mobile station, obtaining a second fingerprint of a mobile subscriber identity, generating a third fingerprint from a combination of said first and second fingerprint, transmitting messages from the home gateway access node to mobile stations, said messages being broadcast to the mobile stations and comprising said third fingerprint, receiving at the mobile station a fingerprint transmitted by the home gateway access node, storing the received fingerprint, comparing the stored fingerprint and information stored in a subscriber identification module associated with the mobile station, and identifying the home gateway access node when a match between said stored fingerprint and information stored in a subscriber identification module associated with the mobile station is detected.

In a typical embodiment, the step of obtaining a first fingerprint of an identity associated with the mobile station comprises a step of generating said first fingerprint using a hash algorithm applied to the identity associated with the mobile station. The step of obtaining a second fingerprint of a mobile subscriber identity comprises a step of generating said second fingerprint using a hash algorithm applied to the mobile subscriber identity.

Another aspect of the invention relates to a home gateway access node for a cellular radio-communication system comprising a core network and an access network, comprising a base transceiver station for providing wireless links to at least one mobile station. The base transceiver station comprises processing means for generating a third fingerprint from input data comprising first and second fingerprint associated with an identity associated with the mobile station, and a mobile subscriber identity, respectively, retrieving means for retrieving from a database in the cellular system first and second fingerprint associated with an identity associated with the mobile station, and a mobile subscriber identity, respectively, and to provide said retrieved first and second fingerprint to the processing means, and transmitting means for radio transmit said generated fingerprint to mobile stations.

Yet another aspect of the invention relates to a mobile station for communicating through a cellular radio-communication system comprising a core network and an access network, the access network comprising home gateway access nodes, which comprises receiving means for receiving a fingerprint in a message transmitted by a home gateway access node, the received fingerprint combining a first fingerprint of an identity associated with the mobile station and a second fingerprint of a mobile subscriber identity.

The mobile station may further comprise storing means for storing the received fingerprint, and processing means for detecting a match between information stored in a subscriber identification module associated with the mobile station and the stored fingerprint.

The processing means may also further include means for, when the subscriber identification module is connected to the mobile station so that information stored therein can be retrieved, retrieving from the subscriber identification module the identity associated with the mobile station and a mobile subscriber identity and generating a fingerprint from input data comprising first and second fingerprint associated with said retrieved identity associated with the mobile station, and mobile subscriber identity, respectively.

The invention also proposes a computer program product for implementing the method in accordance with embodiments of the invention, when the program is loaded and run on computer means of the network.

The invention also proposes a machine readable medium that contains computer program code, wherein, when the computer program code is executed by a processor, the processor performs a method for identifying a home gateway access node, in a cellular radio-communication system comprising a core network and an access network, the access network comprising home gateway access nodes, wherein each home gateway access node has a base transceiver station for providing wireless links to at least one mobile station, the method comprising the steps of obtaining a first fingerprint of an identity associated with the mobile station, obtaining a second fingerprint of a mobile subscriber identity, generating a fingerprint from a combination of said first and second fingerprint, and transmitting messages to mobile stations, said messages being broadcast to the mobile stations and comprising said generated fingerprint.

The invention also proposes a machine readable medium that contains computer program code, wherein, when the computer program code is executed by a processor, the processor performs a method for identifying a home gateway access node, in a cellular radio-communication system comprising a core network and an access network, the access network comprising home gateway access nodes, wherein each home gateway access node has a base transceiver station for providing wireless links to at least one mobile station, the method comprising the steps of receiving a fingerprint transmitted by a home gateway access node, the received fingerprint combining a first fingerprint of an identity associated with the mobile station and a second fingerprint of a mobile subscriber identity, and storing said received fingerprint, comparing said stored fingerprint and information stored in a subscriber identification module associated with the mobile station, and identifying a home gateway access node when a match between said stored fingerprint and information stored in a subscriber identification module associated with the mobile station is detected.

Yet another aspect of the invention relates to a subscriber identity module (SIM) associated with a mobile subscriber, which comprises interfacing means for, when connected to a mobile station in a cellular radio-communication system comprising a core network and an access network, the access network comprising home gateway access nodes, wherein each home gateway access node has a base transceiver station for providing wireless links to the mobile station, receiving from the mobile station a fingerprint combining a first fingerprint of an identity associated with the mobile station and a second fingerprint of a mobile subscriber identity, storing means for storing said received fingerprint, and processing means for comparing the stored fingerprint and data relating to the mobile subscriber stored on the SIM, and for detecting a match between the stored fingerprint and said data relating to the mobile subscriber stored on the SIM.

Yet another aspect of the invention relates to a subscriber identity module (SIM) that contains computer program code and comprises processing means, wherein, when the computer program code is executed by the processing means when the subscriber identity module is connected to a mobile station in a cellular radio-communication system comprising a core network and an access network, the access network comprising home gateway access nodes, wherein each home gateway access node has a base transceiver station for providing wireless links to the mobile station, the processing means performs a method for identifying a home gateway access node comprising the steps of receiving from the mobile station a fingerprint combining a first fingerprint of an identity associated with the mobile station and a second fingerprint of a mobile subscriber identity, and storing said received fingerprint, comparing the stored fingerprint and data relating to the mobile subscriber stored on the SIM, and detecting a match between the stored fingerprint and said data relating to the mobile subscriber stored on the SIM.

Other features and advantages of the invention will become apparent from the following description of non-limiting exemplary embodiments, with reference to the appended drawings, in which:

- Figure 1 is a block diagram of a cellular wireless communication system incorporating an embodiment of the invention;

- Figure 2 is a block diagram of customer equipment including a home gateway according to an embodiment of the invention;

- Figure 3 is a diagram illustrating the structure and format of an IMSI;

- Figure 4 is a block diagram illustrating the operation according to a hash algorithm applied to an IMSI according to an embodiment of the invention.

DESCRIPTION OF PREFERRED EMBODIMENTS

The present invention will be described below in its particular application to third generation (3G) cellular networks of the UMTS ("Universal Mobile Telecommunications Service") type. However, it will be appreciated that it is applicable to very diverse types of digital cellular systems, GSM-GPRS, EDGE, IS 95, other third generation wide-band CDMA cellular system such as CDMA 2000 or TD-SCDMA or evolutions thereof, or 3G LTE (Long Term Evolution) systems.

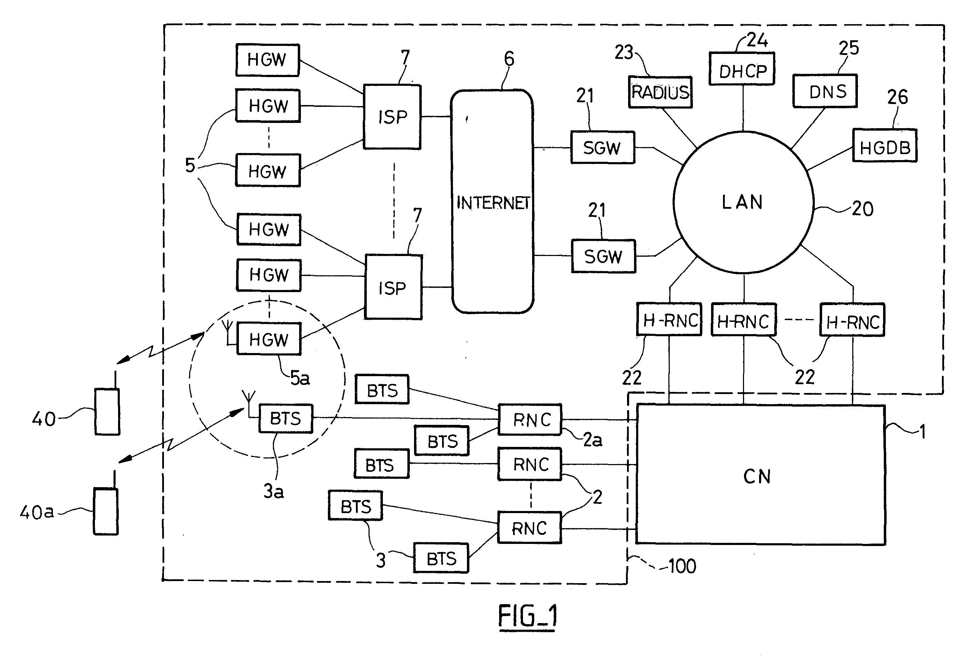

Referring to figure 1, a conventional UMTS system includes a core network (CN) 1 comprising interconnected switches referred to as MSC/VLR (mobile switching center / visitor location register) for circuit-switched services and as SGSN (serving GPRS support node) for packet-switched services. In the UMTS terrestrial radio access network (UTRAN) architecture, a number of radio network controllers (RNCs) 2 are connected to the CN switches. Each RNC 2 supervises a number of base transceiver stations (BTSs) 3, or "nodes B" through an interface referred to as lub in the UMTS standards. The BTSs are distributed over the territory to be covered by the access network 100. Each BTS serves one or several cells where the cellular service is made available to the public. In the embodiment of the invention depicted in figure 1, home gateways (HGWs) 5 are added to the access network 100 to define cells of a different kind, typically pico-cells with an indoor coverage. A HGW 5 uses the same radio interface as a regular BTS 3. For convenience, the set of HGWs 5 can be allocated a specific carrier frequency distinct from that or those used by the BTSs 3, so as to avoid complications in the radio engineering of the public part of the access network due to interference with HGWs. The radio range of a HGW is low, typically a few tens of meters. It is intended to be installed in customer premises, so that it is an efficient means for the cellular operator to offer indoor coverage.

The BTSs 3 and HGWs 5 are capable of communicating by radio with the mobile stations 40, 40a called UE ("User Equipment").

A HGW 5 uses the customer's digital subscriber line (DSL) for broadband access to the Internet 6, for example an asymmetric digital subscriber line (ADSL). The customer's DSL connects the HGW 5 to a router 7 of his/her Internet service provider (ISP).

A private operator network organized as a local area network (LAN) 20 is provided for the integration HGWs 5 to the cellular access network 100. The units of the private operator network 20 include:

- security gateways (SGW) 21 connected to the Internet 6 and capable of establishing secure tunnels with the HGWs through the Internet 7;

- a plurality of RNCs 22, designated here as H-RNC, each connected to the core network 1;

- an authentication server 23, typically using the RADIUS protocol;

- a DHCP server 24 for providing the HGWs with IP addresses in accordance with the standard dynamic host configuration protocol (DHCP);

- a domain name server (DNS) 25; and

- a home gateway management server 26, or home gateway database (HGDB).

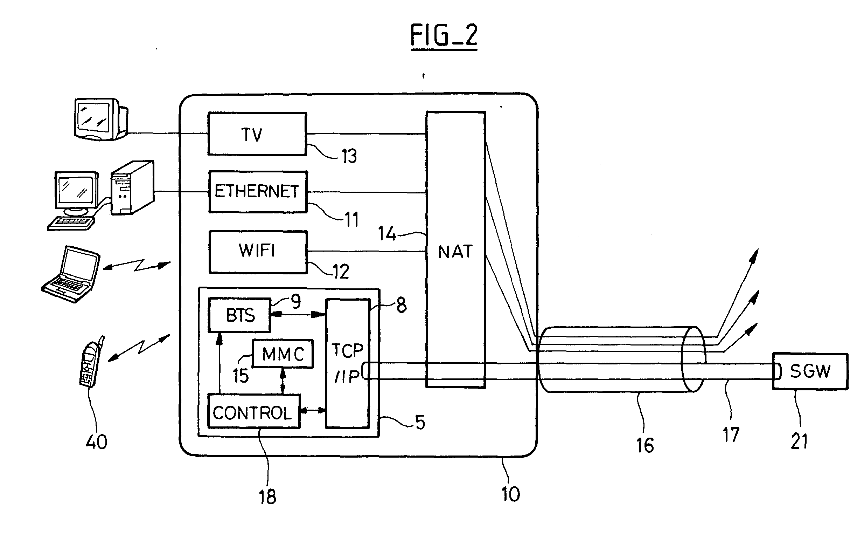

In an exemplary embodiment (figure 2), the HGW 5 belongs to a set top box 10, either as a built-in unit or as a peripheral unit, along with other modules such as an Ethernet board 11, a Wifi board 12, a TV decoder 13, etc. A network address translator (NAT) module 14 is provided within the set top box 10 for interfacing with the Internet via the subscriber's access line 16 and separating the public addressing domain from the private addressing domain of the customer.

The HGW 5 has a network (TCP/IP) interface 8 and a BTS unit 9 suitable for performing the node B functions of the UMTS standard. The HGW 5 is also fitted with a memory microcard (MMC) module 15 in which certain parameters are stored, including:

- a HGW identifier (ID) accessible for reading only, which may be coded in the same manner as the international mobile subscriber identity (IMSI);

- the IP address of a main SGW 21 to be contacted by the HGW. A backup SGW IP address may also be provided in case the main SGW would not be available;

- the IP address of a HGDB 26 to be contacted by the HGW; and

- security credentials for the HGW, stored internally of the MMC without any possible access from the outside.

A control module 18 of the HGW 5 supervises the operation of the BTS unit 9 and exchanges information with the MMC module 15 and the private operator network 20.

Before the HGW 5 is delivered to the customer, some pre-configuration is needed to create the HGW ID and the associated security credentials, to record them into the RADIUS server 23, and to load the above-listed parameters into the MMC module 15. In addition, any customer-specific parameters needed for the operation of the HGW ID is defined and stored in the HGDB 26.

According to the present invention, one or several fingerprints (also referred to as signatures), each associated with a user of the HGW 5, are defined and generated for the purpose of identifying the HGW 5 to the respective mobile station user, i.e. allowing a respective user to verify that he/she is located under the radio coverage of a specific HGW 5 to which it is associated. For that purpose, such a fingerprint is preferably either unique, or defined in such a way that it minimizes the occurrences of false detection. A false detection would for instance occur if a mobile station detects upon reception of the fingerprint that it is located under the radio coverage of the HGW 5 to which its user is associated (e.g. the HGW owned by its user or installed in the residence of its user) although it is not in fact the case. Note that the fact that a specific HGW provides to mobile stations under its radio coverage a fingerprint associated with a specific registered user (possibly referred to as a "registered user fingerprint" in the below description, without limiting the scope of the present invention) constitutes an association between the HGW and the registered user.

According to the preferred embodiment of the invention, these fingerprints are generated in the access network, and stored in the HGDB 26. A fingerprint is based on both an identity associated with the mobile station of the user, and a mobile subscriber identity. According to the invention, those parameters are provisioned at the access network, for each registered user, in association with each HGW 5, and stored in the access network, for example in the HGDB 26.

In the exemplary embodiment, the fingerprint generated for user of the mobile station 40 is based on the IMSI (International Mobile Subscriber Identity) of the mobile station 40 of the user, which is an identity of the subscriber associated with the mobile station 40, and on the MS-ISDN number of the user of the mobile station 40, that is the phone number allocated to the mobile subscriber. The IMSI uniquely identifies the mobile station 40 internationally, is typically stored in the Subscriber Identity Module (SIM) connected to the mobile station 40, and conforms to the ITU E.212 numbering standard.

Because the mobile subscriber fingerprint will be used to identify the home gateway to one or a plurality of mobile station users, the information on which the mobile subscriber fingerprint is based is chosen in view of its availability at both the mobile station side and the access network side. For example, the IMSI and MS-ISDN are both available at the access network, and can be provisioned in the HGDB 26, for each registered user, in association with each HGW 5. On the mobile station side, the IMSI is one of the information item stored on the SIM module (subscriber identification module) - in fact the IMSI is the SIM identity, and the user's MSISDN is also stored on the SIM module, as described in the 3GPP technical specification TS31.102, Section 4.2.26., provided it has been so configured by the mobile station's user, as allowed by any commercially available mobile station.

According to the present invention, the registered user fingerprint is generated based on an identity associated with the mobile station of the user, and a mobile subscriber identity. Those two parameters are not used as such for security and privacy protection purpose. For instance, according to the preferred embodiment of the present invention, the IMSI and MS-ISDN are used in the generation of the mobile subscriber fingerprint. And the IMSI is confidential information, in the sense that the knowledge of the IMSI associated to a user may facilitate some security attacks. Instead, the invention proposes to obtain a first fingerprint of an identity associated with the mobile station of the user, and a second fingerprint of a mobile subscriber identity, and to generate a registered user fingerprint from a combination of said first and second fingerprints.

According to the preferred embodiment of the invention, a fingerprint of the IMSI and a fingerprint of the MS-ISDN are generated. The registered user fingerprint S comprises two parts, $S_{IMSI}$ and $S_{MSISDN}$. S is a byte sequence, of length 4, with bytes numbered from 1 to 4 and denoted:

$$S = [S1, S2, S3, S4]$$

The first part, $S_{IMSI}$, contributes the two first bytes of the sequence, that is:

$$S_{IMSI} = [S1, S2]$$

The second part, $S_{MSISDN}$, contributes the other two bytes of the sequence, that is:

$$S_{MSISDN} = [S3, S4]$$

$S_{IMSI}$ is generated solely from the IMSI, whereas $S_{MSISDN}$ is generated solely from the MS-ISDN.

$S_{IMSI}$ is a fingerprint of the IMSI, generated according to a compression algorithm. The IMSI is thus compressed from an initial length of 5 bytes (10 BCD digits) to 2 bytes.

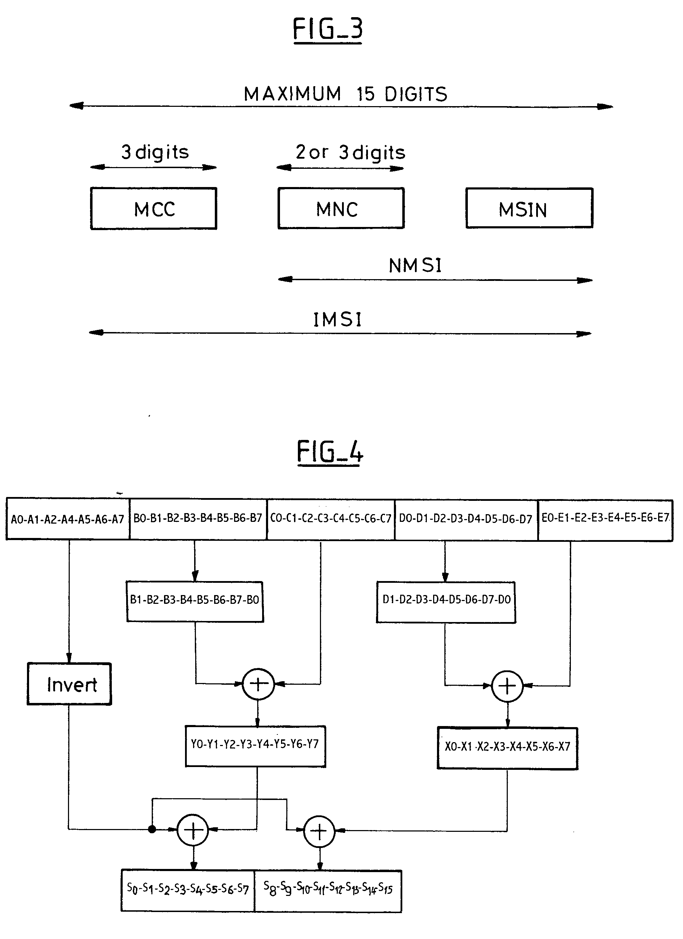

Fig. 3 shows the structure and format of an IMSI, as specified in the ITU recommendation E.212. The IMSI is formed of a Mobile Country Code (MCC) part (3 BCD digits long), a Mobile Network Code (MNC) part (2 or 3 BCD digits long), and a Mobile Station Identity Number (MSIN) part (maximum 10 BCD digits long). Also shown on fig. 3 is the National Mobile Station Identity (NMSI), formed of the MNC and the MSIN. According to a specific embodiment of the present invention, only the MSIN part is used for the purpose of generating $S_{IMSI}$. Fig. 4 shows an example of computation of a 2-byte long $S_{IMSI}$ based on a 10 BCD long MSIN sequence. Note that any other so-called "hash" algorithm known to the man in the art could be used without departing from the teaching of the present invention.

A first shift operation the 3$^{rd}$ and 4$^{th}$ BCD digits [B0 B1 B2 B3 B4 B5 B6 B7] leads to the sequence [B1 B2 B3 B4 B5 B6 B7 B0], which is added to the 5$^{th}$ and 6$^{th}$ BCD digits [C0 C1 C2 C3 C4 C5 C6 C7] to produce the sequence [Y0 Y1 Y2 Y3 Y4 Y5 Y6 Y7]. The sequence [Y0 Y1 Y2 Y3 Y4 Y5 Y6 Y7] is added to the 1$^{st}$ and 2$^{nd}$ BCD digits after an inversion operation to produce the first byte of $S_{IMSI}$: [$S_0$ $S_1$ $S_2$ $S_3$ $S_4$ $S_5$ $S_6$ $S_7$].

A second shift operation of the 7$^{th}$ and 8$^{th}$ BCD digits [D0 D1 D2 D3 D4 D5 D6 D7] leads to the sequence [D1 D2 D3 D4 D5 D6 D7 D0], which is then added to the 9$^{th}$ and 10$^{th}$ BCD digits [E0 E1 E2 E3 E4 E5 E6 E7] to produce the sequence [X0 X1 X2 X3 X4 X5 X6 X7]. The sequence [Y0 Y1 Y2 Y3 Y4 Y5 Y6 Y7] is added to the 1$^{st}$ and 2$^{nd}$ BCD digits after an inversion operation to produce the second byte of $S_{IMSI}$: [$S_8$ $S_9$ $S_{10}$ $S_{11}$ $S_{12}$ $S_{13}$ $S_{14}$ $S_{15}$].

$S_{MS-ISDN}$ is also a fingerprint of the MS-ISDN, generated according to a compression (or "hash") algorithm. The MS-ISDN is thus compressed from an initial length of 4 bytes to 2 bytes.

According to the preferred embodiment of the present invention illustrated on Figure 2, the HGW 5 comprises processing means 18 for generating a registered user fingerprint from input data comprising first and second fingerprint associated with an identity associated with the mobile station, and a mobile subscriber identity, respectively. Said first and second fingerprint are generated in another node of the network, so that the HGW 5 also comprises retrieving means for retrieving from the HGDB 26 first and second fingerprint associated with an identity associated with the mobile station, and a mobile subscriber identity, respectively, and to provide said retrieved first and second fingerprint to the processing means. The processing means generate the registered user fingerprint, and provide the generated registered user fingerprint to transmitting means 9 adapted to transmit said registered user fingerprint to mobile stations, preferably by means of signaling information broadcast.

In the example of UMTS, the common signaling channel conveys system information broadcast by the base station under the control of its controlling RNC. The broadcast system information includes a user-independent list identifying up to forty-eight beacon channels used by base stations located in the neighborhood of the base station in question. In the UMTS, each beacon channel corresponds to a scrambling code used by a base station on its primary common pilot channel (CPICH).

According to one aspect of the invention, the registered user fingerprint is transmitted together with other system information broadcast by the HGW 5.

As mentioned above, the information on which the mobile subscriber fingerprint is based is available at both the mobile station side and the access network side.

According to the preferred embodiment of the present invention, the mobile station comprises receiving means for receiving a registered user fingerprint transmitted by the HGW 5. The mobile station also comprises processing means for detecting a match between information stored in a subscriber identification module associated with the mobile station and the received registered user fingerprint.

According to another aspect of the invention, the identity associated with the mobile station (for instance the MS-ISDN), and a mobile subscriber identity (for instance the IMSI) are stored in a subscriber identification module (SIM) associated with the mobile station 40 when such SIM is connected to the mobile station 40. The processing means further include means for, when the subscriber identification module is connected to the mobile station so that information stored therein can be retrieved, retrieving from the subscriber identification module the identity associated with the mobile station and a mobile subscriber identity and generating a registered user fingerprint from input data comprising first and second fingerprint associated with said retrieved identity associated with the mobile station, and mobile subscriber identity, respectively. The registered user fingerprint generated at the mobile station is then compared with the registered user fingerprint received from the HGW to detect a match.

Alternatively, in another embodiment of the present invention, a registered user fingerprint received by the mobile station 40 on a home gateway access node broadcast channel may be stored on a mobile station Subscriber Identification Module (SIM) connected to the mobile station 40. The registered user fingerprint received by the mobile station 40 is communicated to the SIM through interfacing means on the SIM. Such SIM includes processing means for executing software programs (e.g. small-size software programs called applets). According to this embodiment of the invention, upon reception of a registered user fingerprint, the mobile station 40 SIM stores the received registered user fingerprint and executes an applet designed for detecting a match between the stored register user fingerprint and data stored on the SIM. The SIM applet may further be designed so that the network name displayed on the mobile station 40 is changed should there be a matched.

## Claims

1. A method of identifying a home gateway access node, in a cellular radio-communication system comprising a core network and an access network, the access network comprising home gateway access nodes, wherein each home gateway access node has a base transceiver station for providing wireless links to at least one mobile station, the method comprising the steps of:

   - obtaining a first fingerprint of an identity associated with the mobile station;
   - obtaining a second fingerprint of a mobile subscriber identity;
   - generating a third fingerprint from a combination of said first and second fingerprint;
   - transmitting messages from the home gateway access node to mobile stations, said messages being broadcast to the mobile stations and comprising said third fingerprint;
   - receiving at the mobile station a fingerprint transmitted by the home gateway access node,
   - storing the received fingerprint;
   - comparing the stored fingerprint and information stored in a subscriber identification module associated with the mobile station;
   - identifying the home gateway access node when a match between said stored fingerprint and information stored in a subscriber identification module associated with the mobile station is detected.

2. The method according to claim 1, wherein the step of obtaining a first fingerprint of an identity associated with the mobile station comprises a step of generating said first fingerprint using a hash algorithm applied to the identity associated with the mobile station.

3. The method according to claim 1 or 2, wherein the step of obtaining a second fingerprint of a mobile subscriber identity comprises a step of generating said second fingerprint using a hash algorithm applied to the mobile subscriber identity.

4. A home gateway access node for a cellular radio-communication system comprising a core network and an access network, comprising a base transceiver station for providing wireless links to at least one mobile station, the base transceiver station comprising:

   - processing means for generating a third fingerprint from input data comprising first and second fingerprint associated with an identity associated with the mobile station, and a mobile subscriber identity, respectively;
   - retrieving means for retrieving from a database in the cellular system first and second fingerprint associated with an identity associated with the mobile station, and a mobile subscriber identity, respectively, and to provide said retrieved first and second fingerprint to the processing means;
   - transmitting means for radio transmit said generated fingerprint to mobile stations.

5. A mobile station for communicating through a cellular radio-communication system comprising a core network and an access network, the access network comprising home gateway access nodes, the mobile station comprising:

   - receiving means for receiving a fingerprint in a message transmitted by a home gateway access node, the received fingerprint combining a first fingerprint of an identity associated with the mobile station and a second fingerprint of a mobile subscriber identity.

6. The mobile station according to claim 5, further comprising:

   - storing means for storing the received fingerprint;
   - processing means for detecting a match between information stored in a subscriber identification module associated with the mobile station and the stored fingerprint.

7. The mobile station according to claim 6, wherein the processing means further include means for, when the subscriber identification module is connected to the mobile station so that information stored therein can be retrieved, retrieving from the subscriber identification module the identity associated with the mobile station and a mobile subscriber identity and generating a fingerprint from input data comprising first and second fingerprint associated with said retrieved identity associated with the mobile station, and mobile subscriber identity, respectively.

8. A computer program product for implementing the method according to any of the claims 1 to 3 when loaded and run on computer means of the network.

9. A machine readable medium that contains computer program code, wherein, when the computer program code is executed by a processor, the processor performs a method for identifying a home gateway access node, in a cellular radio-communication system comprising a core network and an access network, the access network comprising home gateway access nodes, wherein each home gateway access node has a base transceiver station for providing wireless links to at least one mobile station, the method comprising the steps of:

- obtaining a first fingerprint of an identity associated with the mobile station;
- obtaining a second fingerprint of a mobile subscriber identity;
- generating a fingerprint from a combination of said first and second fingerprint;
- transmitting messages to mobile stations, said messages being broadcast to the mobile stations and comprising said generated fingerprint.

10. A machine readable medium that contains computer program code, wherein, when the computer program code is executed by a processor, the processor performs a method for identifying a home gateway access node, in a cellular radio-communication system comprising a core network and an access network, the access network comprising home gateway access nodes, wherein each home gateway access node has a base transceiver station for providing wireless links to at least one mobile station, the method comprising the steps of:

- receiving a fingerprint transmitted by a home gateway access node, the received fingerprint combining a first fingerprint of an identity associated with the mobile station and a second fingerprint of a mobile subscriber identity, and storing said received fingerprint;
- comparing said stored fingerprint and information stored in a subscriber identification module associated with the mobile station;
- identifying a home gateway access node when a match between said stored fingerprint and information stored in a subscriber identification module associated with the mobile station is detected.

11. A subscriber identity module (SIM) associated with a mobile subscriber, comprising:

- interfacing means for, when connected to a mobile station in a cellular radio-communication system comprising a core network and an access network, the access network comprising home gateway access nodes, wherein each home gateway access node has a base transceiver station for providing wireless links to the mobile station, receiving from the mobile station a fingerprint combining a first fingerprint of an identity associated with the mobile station and a second fingerprint of a mobile subscriber identity;
- storing means for storing said received fingerprint;
- processing means for comparing the stored fingerprint and data relating to the mobile subscriber stored on the SIM, and for detecting a match between the stored fingerprint and said data relating to the mobile subscriber stored on the SIM.

12. A subscriber identity module (SIM) that contains computer program code and comprises processing means, wherein, when the computer program code is executed by the processing means when the subscriber identity module is connected to a mobile station in a cellular radio-communication system comprising a core network and an access network, the access network comprising home gateway access nodes, wherein each home gateway access node has a base transceiver station for providing wireless links to the mobile station, the processing means performs a method for identifying a home gateway access node comprising the steps of:

- receiving from the mobile station a fingerprint combining a first fingerprint of an identity associated with the mobile station and a second fingerprint of a mobile subscriber identity, and storing said received fingerprint;
- comparing the stored fingerprint and data relating to the mobile subscriber stored on the SIM, and detecting a match between the stored fingerprint and said data relating to the mobile subscriber stored on the SIM.

FIG_1

EP 2 009 944 A1

FIG_2

EP 2 009 944 A1

# FIG_3

MAXIMUM 15 DIGITS

3 digits | 2 or 3 digits

| MCC | MNC | MSIN |

NMSI

IMSI

# FIG_4

| A0-A1-A2-A4-A5-A6-A7 | B0-B1-B2-B3-B4-B5-B6-B7 | C0-C1-C2-C3-C4-C5-C6-C7 | D0-D1-D2-D3-D4-D5-D6-D7 | E0-E1-E2-E3-E4-E5-E6-E7 |

B1-B2-B3-B4-B5-B6-B7-B0

D1-D2-D3-D4-D5-D6-D7-D0

Invert

$(+)$

$(+)$

Y0-Y1-Y2-Y3-Y4-Y5-Y6-Y7

X0-X1-X2-X3-X4-X5-X6-X7

$(+)$

$(+)$

| $S_0$-$S_1$-$S_2$-$S_3$-$S_4$-$S_5$-$S_6$-$S_7$ | $S_8$-$S_9$-$S_{10}$-$S_{11}$-$S_{12}$-$S_{13}$-$S_{14}$-$S_{15}$ |

**European Patent Office**

## EUROPEAN SEARCH REPORT

**Application Number**

EP 07 30 1184

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BOEGEHOLZ H ET AL: "Telefon-Zellen - Die technik des mobilfunknetzes von viag interkom" INTERNET CITATION, [Online] 1999, XP007902622 Retrieved from the Internet: URL:http://www.heise.de/ct/99/18/174/> [retrieved on 2007-07-11] * page 2, paragraph 6 - page 3, paragraph 3 * | 1-12 | INV. H04Q7/38 |
| A | WO 99/20064 A (BRITISH TELECOMM [GB]; CLAPTON ALAN JAMES [GB]; SMITH DAVID GORDON [GB] 22 April 1999 (1999-04-22) * page 3, line 23 - page 4, line 19 * | 1-12 | |
| A | EP 1 484 936 A (SAGEM [FR]) 8 December 2004 (2004-12-08) * paragraphs [0001] - [0003], [0009] - [0011] * | 1-12 | |

-----

**TECHNICAL FIELDS SEARCHED (IPC)**

H04Q

The present search report has been drawn up for all claims

| Place of search | Date of completion of the search | Examiner |
|---|---|---|
| The Hague | 16 November 2007 | Veen, Gerardus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 07 30 1184

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2007

| Patent document cited in search report | | Publication date | Patent family member(s) | | Publication date |
|---|---|---|---|---|---|
| WO 9920064 | A | 22-04-1999 | AU | 9358998 A | 03-05-1999 |
| EP 1484936 | A | 08-12-2004 | FR | 2855927 A1 | 10-12-2004 |

For more details about this annex : see Official Journal of the European Patent Office, No. 12/82